# EUROPEAN PATENT APPLICATION

(11) **EP 4 549 498 A1**
(43) Date of publication of application: **07.05.2025**
(21) Application number: 24204899.9
(22) Date of filing: 07.10.2024
(51) Int. Cl.: C08J 5/18, B32B 27/08, B32B 27/32, C08J 7/052

(54) **SEALANT FILM, PACKAGING MATERIAL AND PACKAGING BODY**

(30) Priority: 31.10.2023 JP 2023186910
(71) Applicant: Toppan Holdings Inc., Tokyo 110-0016 (JP)
(72) Inventor: HAMADA, Daisuke, Tokyo, 110-0016 (JP)
(74) Representative: TBK

(57) **Abstract**

A sealant film including a first layer having heat sealability that contains 65 to 85 mass% of a propylene/ethylene random copolymer (A) having a melting point of 140°C or higher and 15 to 35 mass% of a propylene/ethylene block copolymer (B).

## Description

### TECHNICAL FIELD

The present disclosure relates to a sealant film, a packaging material and a packaging body.

In detail, the present disclosure relates to a sealant film for a packaging bag having excellent heat resistance and low-temperature sealability, a packaging material and a packaging body that are obtained using the sealant film. A sealant film of the present disclosure can be heat-sealed at low temperatures while exhibiting resistance to harsh heat treatments such as a boiling water treatment or a retort treatment and enables a polypropylene-based packaging material to be produced by being laminated with a polypropylene-based biaxially oriented film.

### BACKGROUND

Polypropylene-based films have excellent stiffness and heat resistance, are inexpensive and are thus used as sealant films in a variety of packaging materials such as food packaging.

In Patent Document 1, a polypropylene-based film composed of a crystalline propylene polymer having a melting point of 120°C to 165°C and an ethylene/a-olefin copolymer or a copolymer of ethylene and at least one selected from an α-olefin or cyclic olefin having 3 to 20 carbon atoms and a cyclic polyene has been proposed.

In Patent Document 2, a polypropylene-based film composed of a crystalline propylene/a-olefin random copolymer and an ethylene/a-olefin copolymer has been proposed.

In Patent Document 3, a laminated polypropylene-based non-oriented film composed of two layers of a laminate layer composed of a propylene/a-olefin random copolymer and a propylene/a-olefin block copolymer or a propylene/ethylene block copolymer and a sealing layer composed of a propylene/a-olefin random copolymer and a propylene/ethylene block copolymer has been proposed.

In Patent Document 4, a polypropylene-based composite film composed of three layers, in which an intermediate layer is composed of a propylene/ethylene block copolymer and both surface layers are composed of a propylene-based random copolymer, has been proposed.
Patent Document 1: Japanese Unexamined Patent Publication No. 2003-119298
Patent Document 2: Japanese Unexamined Patent Publication No. 2004-359711
Patent Document 3: Japanese Unexamined Patent Publication No. 2007-237641
Patent Document 4: Japanese Unexamined Patent Publication No. 2017-132186

### SUMMARY

Recently, there have been ongoing studies regarding the use of a polypropylene-based packaging material in which a polypropylene-based film as described above is used as a sealant film and a biaxially oriented polypropylene film (OPP) is used as a substrate film for the purpose of improving the recyclability of packaging materials. This packaging material can be said to be a packaging material in which the sealant film and the substrate film are composed of the same polypropylene-based material. However, the biaxially oriented polypropylene film has a low melting point compared with biaxially oriented polyamide films (ONy) or biaxially oriented polyester films (PET), which have been conventionally used as substrate films, and thus has a limitation of being vulnerable to heat sealing at high temperatures in bag-making processes. Therefore, the polypropylene-based film is required to be excellent in terms of sealability at low temperatures.

Incidentally, in the case of using a packaging material in a retort use, the polypropylene-based film is also required to have heat resistance high enough to withstand, for example, a retort treatment or the like in which a pressurization treatment is performed at a high temperature of 135°C, which is a high retort condition, to perform disinfection and sterilization.

However, at the moment, it is difficult to satisfy both heat resistance and low-temperature sealability, which are in a trade-off relationship as described above, in conventional polypropylene-based films.

The present disclosure has been made in consideration of the above-described circumstances, and an object of the present disclosure is to provide a polypropylene-based sealant film capable of satisfying both heat resistance and low-temperature sealability.

In addition, another object of the present disclosure is to provide a packaging material and a packaging body that are obtained using the polypropylene-based sealant film.

As a result of intensive studies for achieving the above-described objects, the inventors found that it is important that a layer having heat sealability contains a mixture of predetermined amounts of a propylene/ethylene random copolymer (A) having a melting point of 140°C or higher and a propylene/ethylene block copolymer (B) and completed the present disclosure.

A sealant film according to one aspect of the present disclosure includes a first layer having heat sealability that contains 65 to 85 mass% of a propylene/ethylene random copolymer (A) having a melting point of 140°C or higher and 15 to 35 mass% of a propylene/ethylene block copolymer (B).

Such a sealant film is capable of satisfying both heat resistance and low-temperature heat sealability. This effect cannot be obtained in the case of using a resin composition composed of a crystalline propylene polymer and an ethylene/a-olefin copolymer or a copolymer of ethylene and at least one selected from an α-olefin or cyclic olefin having 3 to 20 carbon atoms and a cyclic polyene (for example, Patent Document 1), in the case of using a resin composition composed of a crystalline propylene/a-olefin random copolymer and an ethylene/a-olefin copolymer (for example, Patent Document 2), in the case of using a laminated polypropylene-based non-oriented film composed of two layers of a laminate layer composed of a propylene/a-olefin random copolymer and a propylene/a-olefin block copolymer or a propylene/ethylene block copolymer and a sealing layer composed of a propylene/a-olefin random copolymer and a propylene/ethylene block copolymer (for example, Patent Document 3) or in the case of using a propylene-based random copolymer for outer layers and a propylene/ethylene block copolymer for an intermediate layer (for example, Patent Document 4) and is an effect particularly suitable in the polypropylene-based retort packaging material use.

In one aspect, the propylene/ethylene random copolymer (A) may have a melt flow rate (MFR: ISO 1133) (temperature: 230°C, load: 2.16 kg) of 2.0 to 8.0 g/10 minutes.

In one aspect, an ethylene content in the propylene/ethylene random copolymer (A) may be 6.0 mass% or less.

In one aspect, the propylene/ethylene block copolymer (B) may have a melt flow rate (MFR: ISO 1133) (temperature: 230°C, load: 2.16 kg) of 0.5 to 2.5 g/10 minutes.

In one aspect, the propylene/ethylene block copolymer (B) may contain 90 to 60 mass% of a propylene polymer (B1) and 10 to 40 mass% of an ethylene/propylene copolymer (B2).

In one aspect, the sealant film may include the first layer and a second layer containing a propylene/ethylene block copolymer (B) and an ethylene/propylene copolymer elastomer (C) in this order. The second layer provided in addition to the first layer makes it possible to improve the cold impact resistance of the sealant film.

In one aspect, the second layer may contain 90 to 50 mass% of the propylene/ethylene block copolymer (B) and 10 to 50 mass% of the ethylene/propylene copolymer elastomer (C). This makes it easy to obtain superior cold impact resistance.

In one aspect, the ethylene/propylene copolymer elastomer (C) may have a melt flow rate (MFR: ISO 1133) (temperature: 230°C, load: 2.16 kg) of 0.5 to 3.5 g/10 minutes.

In one aspect, a mass ratio of a propylene content to an ethylene content (propylene content/ethylene content) in the ethylene/propylene copolymer elastomer (C) may be 1.5 to 4.0.

In one aspect, the first layer may have a thickness of 4 to 10 µm, and the second layer may have a thickness of 35 µm or more.

A packaging material according to one aspect of the present disclosure includes the sealant film and a substrate layer.

A packaging body according to one aspect of the present disclosure is made of the packaging material.

According to the present disclosure, it is possible to provide a polypropylene-based sealant film capable of satisfying both heat resistance and low-temperature sealability. That is, according to the present disclosure, it is possible to provide a polypropylene-based sealant film that is excellent in terms of heat resistance high enough to withstand a retort treatment in which a pressurization treatment is performed at a high temperature of 135°C, which is a high retort condition, to perform disinfection and sterilization and low-temperature sealability enabling heat sealing to be favorably performed even on packaging materials in which a polypropylene-based substrate film is used.

In addition, according to the present disclosure, it is possible to provide a packaging material and a packaging body that are obtained using the polypropylene-based sealant film.

### BRIEF DESCRIPTION OF THE DRAWINGS

FIG. 1 is a cross-sectional view of a sealant film according to one embodiment of the present disclosure.
FIG. 2 is a cross-sectional view of a packaging material according to one embodiment of the present disclosure.

### DETAILED DESCRIPTION

### <Sealant film>

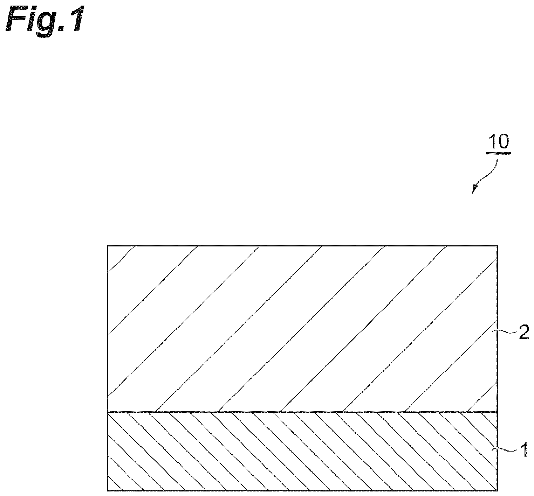

FIG. 1 is a cross-sectional view of a sealant film according to one embodiment of the present disclosure. A sealant film 10 includes a first layer 1 having sealability. As shown in the same drawing, the sealant film 10 may include the first layer 1 and a second layer 2 in this order or may include the first layer 1, the second layer 2 and a third layer (not shown) in this order. The sealant film 10 can be used as a polypropylene-based non-oriented sealant film.

The layers configuring the sealant film 10 contain a variety of polypropylene-based resins. As a raw material of this polypropylene-based resin, not only a component generated from petroleum but also a component generated from a raw material derived from a recycled chemical collected by post consumer recycling, a blended product thereof or the like can be used with no particular limitations.

### [First layer]

The first layer is a layer that mainly imparts heat resistance and low-temperature sealability to the sealant film.

The first layer contains a propylene/ethylene random copolymer (A) having a melting point of 140°C or higher and a propylene/ethylene block copolymer (B). The joint use of an appropriate amount of each of the propylene/ethylene block copolymer (B) having a high melting point and the propylene/ethylene random copolymer (A) having a melting point that is appropriately lower than the melting point of the propylene/ethylene block copolymer (B) makes it possible to satisfy both excellent heat resistance and low-temperature sealability. In addition, the use of the propylene/ethylene block copolymer (B) as a polypropylene-based resin having a high melting point makes it easy to obtain excellent cold impact resistance. The first layer is a heat sealing layer, that is, a layer having sealability, and a packaging body can be formed by thermally fusing the first layers of the sealant films together.

### (Propylene/ethylene random copolymer (A))

The propylene/ethylene random copolymer (A) can be obtained by, for example, copolymerizing ethylene as a comonomer in a main monomer composed of propylene using a Ziegler-Natta catalyst, a metallocene catalyst or a half metallocene catalyst. The propylene/ethylene random copolymer (A) that is contained in the first layer makes it easy to obtain excellent low-temperature sealability.

As the propylene/ethylene random copolymer (A), a random copolymer having a melting point of 140°C or higher when heated from 25°C to 230°C at a heating rate of 10 °C/minute, then, cooled from 230°C to 25°C at a cooling rate of 10 °C/minute and then further heated from 25°C to 230°C at a heating rate of 10 °C/minute in differential scanning calorimetry (JIS K 7121) is used. The use of the random copolymer having a melting point within this range makes it easy to obtain excellent low-temperature sealability while maintaining heat resistance. From this viewpoint, the melting point can be set to 142°C or higher and may be 144°C or higher.

The upper limit of the melting point is not particularly limited and may be 150°C or lower or 148°C or lower from the viewpoint of the physical properties of the propylene/ethylene random copolymer itself.

As the propylene/ethylene random copolymer (A), a random copolymer having a melt flow rate (MFR: ISO 1133) (temperature: 230°C, load: 2.16 kg) of 2.0 to 8.0 g/10 minutes can be used. When the melt flow rate is the lower limit value or higher, the load on an extruder during a molding process becomes small, the process rate is less likely to decrease, and it is easy to maintain excellent productivity. In addition, when the melt flow rate is the upper limit value or lower, it is easy to maintain an excellent impact property.

The ethylene content in the propylene/ethylene random copolymer (A) can be set to 6.0 mass% or less. When the ethylene content is the upper limit value or less, the heat resistance does not excessively deteriorate while the low-temperature sealability is maintained, and it becomes easier to suppress fusion on the inner surfaces of packaging bodies, for example, even after a pressure heating treatment under a high retort condition of 135°C. From this viewpoint, the ethylene content may be 5.5 mass% or less or may be 4.5 mass% or less.

The lower limit of the ethylene content is not particularly limited and can be set to 3.0 mass% from the viewpoint of the low-temperature sealability.

The ethylene content of the propylene/ethylene random copolymer (A) can be measured according to a method for determining the ethylene content (IR method) described in pp. 412 and 413 of Polymer Analysis Handbook (May 10, 2013, 3rd impression) edited by Polymer Analysis Conference of The Japan Society For Analytical Chemistry.

### (Propylene/ethylene block copolymer (B))

The propylene/ethylene block copolymer (B) is a copolymer that can be obtained by producing a propylene polymer (B1) in a first step and then producing an ethylene/propylene copolymer (B2) by gas-phase polymerization in a second step. The propylene/ethylene block copolymer (B) is not a block copolymer in which a propylene polymer terminal and an ethylene/propylene copolymer terminal have been bonded together but a kind of a blend-system polymer. The propylene/ethylene block copolymer (B) that is contained in the first layer makes it possible to impart excellent heat resistance to the first layer.

As the propylene/ethylene block copolymer (B), a block copolymer having a melt flow rate (MFR: ISO 1133) (temperature: 230°C, load: 2.16 kg) of 0.5 to 2.5 g/10 minutes can be used. When the melt flow rate is the lower limit value or higher, the load on an extruder during a molding process becomes small, the process rate is less likely to decrease, and it is easy to maintain excellent productivity. In addition, when the melt flow rate is the upper limit value or lower, it is easy for the first layer to have excellent cold impact resistance.

The propylene/ethylene block copolymer (B) may contain 90 to 60 mass% of the propylene polymer (B1) and 10 to 40 mass% of the ethylene/propylene copolymer (B2). When the amount of each component is within this range, it is easy to obtain excellent cold impact resistance. From this viewpoint, the propylene/ethylene block copolymer (B) may contain 87.5 to 65 mass% of the propylene polymer (B1) and 12.5 to 35 mass% of the ethylene/propylene copolymer (B2) or may contain 85 to 70 mass% of the propylene polymer (B1) and 15 to 30 mass% of the ethylene/propylene copolymer (B2).

The ethylene content in the ethylene/propylene copolymer (B2) is not particularly limited and can be set to 20 to 40 mass%. When the ethylene content is the upper limit value or less, it is possible to suppress the tackiness of a product, contamination due to the tacking of the product during production is less likely to be caused, and it is easy to maintain the productivity. When the ethylene content is the lower limit value or more, it is easy to obtain excellent cold impact resistance.

The first layer contains 65 to 85 mass% of the propylene/ethylene random copolymer (A) and 15 to 35 mass% of the propylene/ethylene block copolymer (B). When the content of the propylene/ethylene random copolymer (A) is 65 mass% or more, it is possible to develop excellent low-temperature sealability. From this viewpoint, the content may be 70 mass% or more or may be 75 mass% or more. When the content of the propylene/ethylene random copolymer (A) is 85 mass% or less, that is, the content of the propylene/ethylene block copolymer (B) is at least 15 mass% or more, it is possible to develop low-temperature sealability while excellent heat resistance is maintained. From this viewpoint, the content of the propylene/ethylene random copolymer (A) may be 80 mass% or less or may be 78 mass% or less. From the above-described viewpoint, the content of the propylene/ethylene block copolymer (B) may be 20 to 30 mass% or may be 22 to 25 mass%.

### [Second layer]

The sealant film may further include a second layer to further improve the cold impact resistance of the film.

The second layer contains a propylene/ethylene block copolymer (B) and an ethylene/propylene copolymer elastomer (C).

### [Propylene/ethylene block copolymer (B)]

The details of the propylene/ethylene block copolymer (B) are as described above. The propylene/ethylene block copolymer (B) that is used in the second layer and the propylene/ethylene block copolymer (B) that is used in the first layer may be the same compound or different compounds, but are preferably the same compound from the viewpoint of the interlayer strength between the first layer and the second layer. The propylene/ethylene block copolymer (B) that is used in the second layer makes it possible to impart excellent cold impact resistance to the second layer.

### (Ethylene/propylene copolymer elastomer (C))

The ethylene/propylene copolymer elastomer (C) can be obtained by, for example, a slurry polymerization method that is performed in the presence of an inactive hydrocarbon such as hexane, heptane or kerosene or a liquefied α-olefin solvent such as propylene, a gas-phase polymerization method in the absence of a solvent or the like. Specifically, the ethylene/propylene copolymer elastomer (C) is a polymerization-type high rubber-containing polypropylene-based resin that can be obtained using a well-known multi-stage polymerization method, that is, can be obtained by polymerizing propylene and/or a propylene/a-olefin polymer in a reactor of the first stage and then copolymerizing propylene and an α-olefin in a reaction of the second stage. The ethylene/propylene copolymer elastomer (C) that is contained in the second layer makes it easy to obtain superior cold impact resistance.

As the ethylene/propylene copolymer elastomer (C), a copolymer elastomer having a melt flow rate (MFR: ISO 1133) (temperature: 230°C, load: 2.16 kg) of 0.5 to 3.5 g/10 minutes can be used. When the melt flow rate is the lower limit value or higher, the load on an extruder during a molding process becomes small, the process rate is less likely to decrease, and it is easy to maintain excellent productivity. In addition, when the melt flow rate is the upper limit value or lower, the compatibility between the propylene/ethylene block copolymer (B) and the ethylene/propylene copolymer elastomer (C) becomes favorable, and it is easy to obtain cold impact resistance.

As the ethylene/propylene copolymer elastomer (C), a copolymer elastomer having a mass ratio of the propylene content to the ethylene content (propylene content/ethylene content) of 1.5 to 4.0 can be used. This makes it easy to obtain superior cold impact resistance.

The second layer may contain 90 to 50 mass% of the propylene/ethylene block copolymer (B) and 10 to 50 mass% of the ethylene/propylene copolymer elastomer (C). When the content of the propylene/ethylene block copolymer (B) is 50 mass% or more, it is easy to maintain superior heat resistance. From this viewpoint, the content may be 60 mass% or more or may be 70 mass% or more. When the content of the propylene/ethylene block copolymer (B) is 90 mass% or less, that is, the content of the ethylene/propylene copolymer elastomer (C) is at least 10 mass%, it is possible to develop excellent cold impact resistance. From this viewpoint, the content of the propylene/ethylene block copolymer (B) may be 87.5 mass% or less or may be 85 mass% or less. From the above-described viewpoint, the content of the ethylene/propylene copolymer elastomer (C) may be 12.5 to 40 mass% or may be 15 to 30 mass%.

### [Third layer]

The sealant film may further include a third layer to improve a function as a film.

The third layer needs to be a layer containing a polypropylene-based resin and is preferably a layer containing, similar to the first layer, the propylene/ethylene random copolymer (A) and the propylene/ethylene block copolymer (B) and more preferably contains 65 to 85 mass% of the propylene/ethylene random copolymer (A) and 15 to 35 mass% of the propylene/ethylene block copolymer (B). When the first layer and the third layer have the same configuration, it is easy to suppress the curling of the sealant film.

To each layer of the sealant film, an additive such as an antioxidant, a lubricant, an anti-blocking agent, a nucleating agent, an antistatic agent, a neutralizing agent, a pigment or a dye may be added to an extent that the function of the film is not affected. The kind of the additive is selected as appropriate depending on the use or the like of the film.

Examples of the antioxidant include phenol-based antioxidants, organic phosphite-based antioxidants, thioether-based antioxidants, hindered amine-based antioxidants and the like.

Examples of the lubricant include bisamides such as ethylene bisstearamide, higher fatty acid amides such as oleamide and erucamide, higher fatty acid metal salts such as calcium stearate, zinc stearate and montanic acid metal salts, polyolefin waxes such as polyethylene wax and polypropylene wax and the like.

Examples of the anti-blocking agent include aluminum oxide, talc, diatomaceous earth, fine silica powders, polymethyl methacrylate powders, silicone resins and the like.

Examples of the nucleating agent include α crystal nucleating agents such as sorbitol-based compounds, organic phosphate metal salt-based compounds, organic carboxylate metal salt-based compounds and rosin-based compounds, β crystal nucleating agents such as amide-based compounds and quinanacridone-based compounds, metal benzoates, alkyl fatty acid salts, talc and the like.

Examples of the pigment include titanium oxide, zinc oxide, carbon black and the like. Titanium oxide is preferably used to impart concealability to packaging materials. The average particle diameter of the titanium oxide may be 0.10 to 0.50 µm, may be 0.15 to 0.40 µm or may be 0.20 to 0.30 µm. The average particle diameter of the titanium oxide is a value that is measured by a laser diffraction/scattering method. The content of the titanium oxide is preferably 0.10 to 30 mass% based on the total mass of the polypropylene-based resin that is contained in the sealant film to impart concealability. The content of the titanium oxide imparting concealability may be 1 mass% or more, 5 mass% or more or 7 mass% or more based on the total mass of the polypropylene-based resin from the viewpoint of being superior in terms of concealability. The content of the titanium oxide may be 23 mass% or less, 20 mass% or less, 15 mass% or less, 12 mass% or less or 8 mass% or less based on the total mass of the polypropylene-based resin from the viewpoint of being superior in terms of recyclability and cold impact resistance.

The thickness of the sealant film is not particularly limited as long as the sealant film can be used as, for example, films for packaging materials; however, in a case where the thickness is too thick, there are no merits in terms of cost. Therefore, the thickness of the film can be set to 100 µm or less and may be 40 to 80 µm. The thickness of the sealant film may be the thickness of the first layer itself.

In a case where the sealant film further includes the second layer, the thickness of the second layer can be set to 35 µm or more and may be 40 µm or more or 45 µm or more. When the thickness of the second layer is the lower limit value or more, it is easy to obtain excellent cold impact resistance. The upper limit value of the thickness of the second layer is not particularly limited and can be set to 75 µm from the viewpoint of the cost.

In a case where the sealant film further includes the second layer, the thickness of the first layer may be 4 to 10 µm. When the thickness of the first layer is the lower limit value or more, it is easy to maintain excellent low-temperature sealability. In addition, when the thickness is the upper limit value or less, it is easy to obtain the cold impact resistance of the film.

In a case where the sealant film further includes the third layer, the thickness of the third layer may be the same as the thickness of the first layer. This makes it easy to suppress the warpage of the film.

In a case where the sealant film further includes the third layer, the thicknesses of the first layer and the third layer may be each 4 to 10 µm. When the thicknesses of the first layer and the third layer are the lower limit value or more, it is easy to maintain excellent low-temperature sealability. In addition, when the thicknesses are the upper limit value or less, it is easy to obtain the cold impact resistance of the film.

### <Method for producing sealant film>

A method for producing the sealant film is not particularly limited, and a well-known method can be used. Examples of a thermoforming process method include melting and kneading methods in which an ordinary mixer such as a single-screw extruder, a twin-screw extruder or a multi-screw extruder is used, methods in which each component is dissolved or dispersed and mixed and the solvent is heated and removed and the like. In the case of taking workability into account, it is possible to use a single-screw extruder or a twin-screw extruder. In the case of using a single-screw extruder, examples of the screw include a full flight screw, a screw having a mixing element, a barrier flight screw, a fluted screw and the like, and these can be used with no particular limitations. As a twin-screw kneading device, it is possible to use a co-rotating twin-screw extruder, a counter-rotating twin-screw extruder and the like, and as the shape of the screw, a full flight screw, a kneading disc-type screw and the like can be used with no particular limitations.

In the method, it is possible to use a method in which the raw material of each layer is melted with a single-screw extruder or a twin-screw extruder and a film is then formed with a T die through a feed block or a multi manifold.

On the obtained sealant film, a surface modification treatment for improving the post step suitability may be performed as necessary. For example, a surface modification treatment may be performed on a surface that is to be brought into contact with a printing surface or a substrate layer in order to improve the printing suitability when the sealant film is used as a single film or to improve the lamination suitability when the sealant film is used after being laminated with a substrate layer. Examples of the surface modification treatment include treatments for generating a functional group by oxidizing the film surface such as a corona discharge treatment, a plasma treatment and flame treatment and modification treatments by a wet process for forming an easy-adhesion layer by coating.

### <Packaging material>

The sealant film may be used as a single film or may be used after being laminated with a substrate layer, and a method for using the sealant film as a packaging material is not particularly limited. The sealant film is provided in a packaging material so that the first layer having heat sealability is on the content side.

In a case where the sealant film is used after being laminated with a substrate layer, a packaging material may include the sealant film and the substrate layer. Such a packaging material can be obtained by, specifically, laminating at least one biaxially oriented polypropylene film (OPP) on the sealant film to form a laminate.

The biaxially oriented polypropylene film (OPP) may be composed of any one or more resins of a propylene homopolymer, a propylene/ethylene random copolymer and a propylene/ethylene block copolymer or can also be obtained by laminating a plurality of these resins.

In the biaxially oriented polypropylene film (OPP), the proportion of the polypropylene-based resin may be 99.5 mass% or more based on the total amount thereof. The biaxially oriented polypropylene film (OPP) may contain an additive such as an antistatic agent, an ultraviolet absorber, a plasticizer or a lubricant as a trace component. On the biaxially oriented polypropylene film (OPP), a surface treatment such as a plasma treatment may be performed to improve the adhesion to a layer to be laminated thereon. In addition, an inorganic oxide layer (metal oxide-deposited layer) may be provided on the biaxially oriented polypropylene film.

The thickness of the oriented polypropylene film (OPP) is not particularly limited, but is, for example, 0.1 mm or less, preferably 40 µm or less, more preferably 35 µm or less and particularly preferably 30 µm or less. When the thickness of the biaxially oriented polypropylene film (OPP) is 0.1 mm or less, the flexibility of the packaging material further improves, which makes it possible to further improve the durability. In addition, the thickness of the biaxially oriented polypropylene film (OPP) is preferably 10 µm or more and more preferably 12 µm or more from the viewpoint of improving the strength.

As the biaxially oriented polypropylene film, a film having a melting point of 168°C or higher can be preferably used, and the melting point is obtained from a temperature at which the peak top is present in a melting curve that is shown when the film has been heated from 25°C to 230°C at a heating rate of 10 °C/minute in differential scanning calorimetry (JIS K 7121). Such a film makes it easy to suppress shrinkage caused by heat at the time of heat-sealing the packaging material.

The sealant film and the substrate layer can be laminated together through an adhesive layer. As the material of the adhesive layer, for example, a polyester/isocyanate-based resin, an urethane resin, a polyether-based resin, an acid-modified product of a polyolefin and the like can be used.

### <Configuration of packaging material>

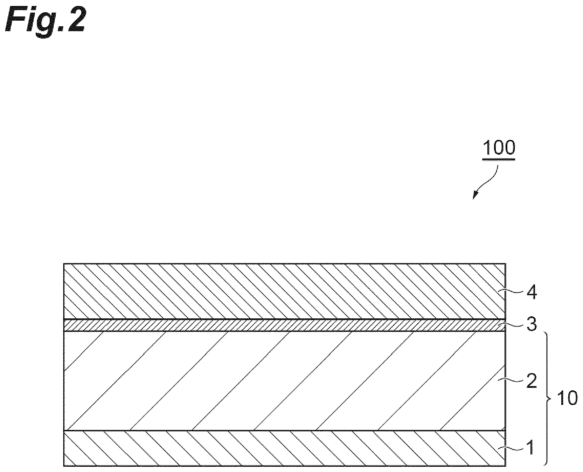

FIG. 2 is a cross-sectional view of a packaging material according to one embodiment of the present disclosure. A packaging material 100 shown in the same drawing includes the sealant film 10, an adhesive layer 3 and a substrate layer 4 in this order. The packaging material 100 is used in a state where the sealant film 10 is on the content side. The films that configure the laminate can be pasted together by a dry lamination method using an adhesive as shown in the same drawing, and for example, the sealant film 10 can also be directly extruded, laminated and pasted onto the substrate layer 4.

On at least one surface of the substrate layer 4, an inorganic oxide layer may be formed, and a gas-barrier coating layer may be formed on the inorganic oxide layer.

The inorganic oxide layer is a layer capable of imparting a high barrier property to the packaging material in a thickness that needs to be extremely thin to prevent the recyclability of the packaging material from being affected. The inorganic oxide layer is, for example, a layer that contains an inorganic oxide such as aluminum oxide or silicon oxide and is formed by vacuum film formation.

The gas-barrier coating layer is a gas-barrier layer that protects the surface of the inorganic oxide layer and is formed using, for example, a composition for forming the gas-barrier coating layer containing at least one selected from the group consisting of a hydroxyl group-containing polymer compound, a metal alkoxide, a silane coupling agent and hydrolyzates thereof.

The laminate structure of the laminate can be adjusted as appropriate depending on the required characteristics of a packaging body, for example, a barrier property that satisfies the quality retention period of food to be packaged, the size and the impact resistance that are large enough to withstand the weight of a content, the visibility of the content and the like.

### <Packaging body>

The packaging body may be made of the packaging material, and the bag-making form is not particularly limited. The packaging material (laminate) can be used in, for example, flat pouches, three-sided pouches, center seal pouches, gusseted pouches, standing pouches, spouted pouches, pouches with a beak and the like for which the sealant film 10 is used as a sealing material.

### [Examples]

Hereinafter, the present disclosure will be described in detail using examples and comparative examples, but the present disclosure is not limited to the following examples alone.

### <Production of sealant film>

### (Example 1)

A propylene/ethylene random copolymer (A), a propylene/ethylene block copolymer (B) and an ethylene/propylene copolymer elastomer (C), which will be shown below, were prepared.

### (Propylene/ethylene random copolymer (A))

A propylene/ethylene random copolymer having a melting point of 146°C when subjected to differential scanning calorimetry (JIS K 7121), a melt flow rate (MFR: ISO 1133) (temperature: 230°C, load: 2.16 kg) of 7.5 g/10 minutes and an ethylene content of 3.4 mass%

Regarding the measurement of the melting point, the propylene/ethylene random copolymer was heated from 25°C to 230°C at a heating rate of 10 °C/minute, then, cooled from 230°C to 25°C at a cooling rate of 10 °C/minute and then further heated from 25°C to 230°C at a heating rate of 10 °C/minute using differential scanning calorimetry, and a melting peak temperature that was shown in the second heating step was measured as the melting point.

The ethylene content was measured according to a method for determining the ethylene content (IR method) described in pp. 412 and 413 of Polymer Analysis Handbook (May 10, 2013, 3rd impression) edited by Polymer Analysis Conference of The Japan Society For Analytical Chemistry.

### (Propylene/ethylene block copolymer (B))

A propylene/ethylene block copolymer having a melt flow rate (MFR: ISO 1133) (temperature: 230°C, load: 2.16 kg) of 1.8 g/10 minutes, containing 81.5 mass% of a propylene polymer and 18.5 mass% of an ethylene/propylene copolymer and having an ethylene content in the ethylene/propylene copolymer of 36.2 weight%

### (Ethylene/propylene copolymer elastomer (C))

CATALLOY Q100F (trade name) (manufactured by LyondellBasell Industries N.V.), which is an ethylene/propylene copolymer elastomer (C), was used. CATALLOY Q100F had a melt flow rate (MFR: ISO 1133) (temperature: 230°C, load: 2.16 kg) of 0.6 g/10 minutes and had a mass ratio of the propylene content to the ethylene content of 2.7.

A resin mixture was prepared by mixing 85.0 mass% of the propylene/ethylene random copolymer (A) and 15.0 mass% of the propylene/ethylene block copolymer (B) in a pellet state to form a first layer.

A resin mixture was prepared by mixing 70.0 mass% of the propylene/ethylene block copolymer (B) and 30.0 mass% of the ethylene/propylene copolymer elastomer (C) in a pellet state to form a second layer.

Each resin mixture was supplied to an extruder adjusted to a temperature of 250°C, kneaded in a molten state and laminated in a T die extruder having a feed block so that the thickness of the first layer reached 10 µm and the thickness of the second layer reached 50 µm, thereby producing a film of Example 1.

### (Example 2)

A film of Example 2 was produced in the same manner as in Example 1 except that the mixing proportion of the propylene/ethylene random copolymer (A) and the propylene/ethylene block copolymer (B) was changed as shown in Table 1.

### (Example 3)

A film of Example 3 was produced in the same manner as in Example 1 except that the mixing proportion of the propylene/ethylene random copolymer (A) and the propylene/ethylene block copolymer (B) and the mixing proportion of the propylene/ethylene block copolymer (B) and the ethylene/propylene copolymer elastomer (C) were changed as shown in Table 1.

### (Example 4)

A propylene/ethylene block copolymer (B') shown below was prepared as a material that was to be used for a second layer.

### (Propylene/ethylene block copolymer (B'))

A propylene/ethylene block copolymer having a melt flow rate (MFR: ISO 1133) (temperature: 230°C, load: 2.16 kg) of 2.5 g/10 minutes, containing 81.0 mass% of a propylene polymer and 19.0 mass% of an ethylene/propylene copolymer and having an ethylene content in the ethylene/propylene copolymer of 36.7 weight%

A film of Example 4 was produced in the same manner as in Example 3 except that a resin mixture was prepared by mixing 70.0 mass% of the propylene/ethylene block copolymer (B') and 30.0 mass% of the ethylene/propylene copolymer elastomer (C) in a pellet state to form the second layer.

### (Example 5)

A film of Example 5 was produced in the same manner as in Example 1 except that a resin mixture was prepared by mixing 70.0 mass% of the propylene/ethylene random copolymer (A) and 30.0 mass% of the propylene/ethylene block copolymer (B') in a pellet state to form a first layer.

### (Example 6)

A propylene/ethylene random copolymer (A') shown below was prepared as a material that was to be used for a first layer.

### (Propylene/ethylene random copolymer (A'))

A propylene/ethylene random copolymer having a melting point of 144°C when subjected to differential scanning calorimetry (JIS K 7121), a melt flow rate (MFR: ISO 1133) (temperature: 230°C, load: 2.16 kg) of 7.5 g/10 minutes and an ethylene content of 5.4 mass%

A film of Example 6 was produced in the same manner as in Example 1 except that a resin mixture was prepared by mixing 85.0 mass% of the propylene/ethylene random copolymer (A') and 15.0 mass% of the propylene/ethylene block copolymer (B) in a pellet state to form the first layer.

### (Example 7)

A film of Example 7 was produced in the same manner as in Example 1 except that a resin mixture was prepared by mixing 70.0 mass% of the propylene/ethylene random copolymer (A') and 30.0 mass% of the propylene/ethylene block copolymer (B) in a pellet state to form a first layer.

### (Example 8)

A film of Example 8 was produced in the same manner as in Example 1 except that the second layer was formed using the propylene/ethylene block copolymer (B) alone.

### (Example 9)

A film of Example 9 was produced in the same manner as in Example 1 except that each resin mixture was laminated so that the thickness of the first layer reached 20 µm and the thickness of the second layer reached 40 µm.

### (Comparative Example 1)

A film of Comparative Example 1 was produced in the same manner as in Example 1 except that a resin mixture prepared by mixing 90.0 mass% of the propylene/ethylene random copolymer (A) and 10.0 mass% of the propylene/ethylene block copolymer (B) in a pellet state was used.

### (Comparative Example 2)

A film of Comparative Example 2 was produced in the same manner as in Example 1 except that a resin mixture prepared by mixing 60.0 mass% of the propylene/ethylene random copolymer (A) and 40.0 mass% of the propylene/ethylene block copolymer (B) in a pellet state was used.

### (Comparative Example 3)

A propylene/ethylene random copolymer (A") shown below was prepared as a material that was to be used for a first layer.

### (Propylene/ethylene random copolymer (A"))

A propylene/ethylene random copolymer having a melting point of 133°C when subjected to differential scanning calorimetry (JIS K 7121), a melt flow rate (MFR: ISO 1133) (temperature: 230°C, load: 2.16 kg) of 7.0 g/10 minutes and an ethylene content of 7.1 mass%

A film of Comparative Example 3 was produced in the same manner as in Example 1 except that a resin mixture was prepared by mixing 70.0 mass% of the propylene/ethylene random copolymer (A") and 30.0 mass% of the propylene/ethylene block copolymer (B) in a pellet state to form the first layer.

### (Comparative Example 4)

A film of Comparative Example 4 was produced in the same manner as in Example 1 except that a resin mixture was prepared by mixing 50.0 mass% of the propylene/ethylene random copolymer (A") and 50.0 mass% of the propylene/ethylene block copolymer (B) in a pellet state to form the first layer.

### <Variety of evaluations>

On the film obtained in each of the examples and the comparative examples, the following evaluations were performed. The results are shown in Table 1 and Table 2.

### [Low-temperature sealability evaluation]

The films obtained in each of the examples and the comparative examples were heat-sealed in a state where the first layers thereof faced each other using a heat sealer manufactured by Tester Sangyo Co., Ltd. under conditions of a sealing pressure of 0.2 MPa, a sealing time of one second and a sealing width of 5 mm at sealing temperatures within a range of 140°C to 160°C in 2°C increments. After that, a piece that was 15 mm in width and 80 mm in length was cut out from the heat-sealed films, and the heat seal strength was measured at a tensile rate of 300 mm/min using a tensile tester manufactured by Shimadzu Corporation. A temperature at which the heat seal strength reached 15 N/15 min or higher was regarded as the heat sealing-start temperature, and when the heat sealing-start temperature was lower than 150°C, the low-temperature sealability was determined to be favorable.

### [Heat resistance evaluation]

The films obtained in each of the examples and the comparative examples were heat-sealed in a state where the first layers thereof faced each other using the heat sealer manufactured by Tester Sangyo Co., Ltd. under conditions of a sealing pressure of 0.05 MPa, a sealing time of 30 seconds, a sealing width of 10 mm and a sealing temperature of 135°C. After that, a piece that was 15 mm in width and 80 mm in length was cut out from the heat-sealed films, T-peel was performed thereon at a tensile rate of 300 mm/min using the tensile tester manufactured by Shimadzu Corporation, and the thermal fusion strength of the heat-sealed portion was measured. When the thermal fusion strength was 2.0 N/15 mm or lower in the present measurement, the heat resistance was determined to be favorable.

### [Cold impact resistance evaluation]

The failure energy of the film during the low-temperature storage of the film obtained in each of the examples and the comparative examples was measured using a film impact tester manufactured by Toyo Seiki Seisaku-Sho, Ltd. under conditions of a temperature of -5°C, a maximum weight of 1.5 J and a pendulum head size of 1/2 inches.

**[Table 1]**

| | | | Example 1 | Example 2 | Example 3 | Example 4 | Example 5 | Example 6 | Example 7 |
|---|---|---|---|---|---|---|---|---|---|
| Thickness | Total | (µm) | 60 | 60 | 60 | 60 | 60 | 60 | 60 |
| | First layer | (µm) | 10 | 10 | 10 | 10 | 10 | 10 | 10 |
| | Second layer | (µm) | 50 | 50 | 50 | 50 | 50 | 50 | 50 |
| Composition of first layer | Resin (A) | (mass%) | 85.0 | 70.0 | 80.0 | 80.0 | 70.0 | - | - |
| | Resin (A') | (mass%) | - | - | - | - | - | 85.0 | 70.0 |
| | Resin (B) | (mass%) | 15.0 | 30.0 | 20.0 | 20.0 | - | 15.0 | 30.0 |
| | Resin (B') | (mass%) | - | - | - | - | 30.0 | - | - |
| Composition of second layer | Resin (B) | (mass%) | 70.0 | 70.0 | 90.0 | - | 70.0 | 70.0 | 70.0 |
| | Resin (B') | (mass%) | - | - | - | 70.0 | - | - | - |
| | Resin (C) | (mass%) | 30.0 | 30.0 | 10.0 | 30.0 | 30.0 | 30.0 | 30.0 |
| Heat sealing-start temperature | | [°C] | 146 | 148 | 148 | 148 | 148 | 144 | 146 |
| Thermal fusion strength | | [N/15 mm] | 1.85 | 1.22 | 0.47 | 0.47 | 0.78 | 1.90 | 1.38 |
| Cold impact resistance | | [J/mm] | 14.0 | 15.5 | 11.9 | 18.7 | 17.3 | 13.8 | 15.3 |

**[Table 2]**

| | | | Example 8 | Example 9 | | Comparative Example 1 | Comparative Example 2 | Comparative Example 3 | Comparative Example 4 |
|---|---|---|---|---|---|---|---|---|---|
| Thickness | Total | (µm) | 60 | 60 | | 60 | 60 | 60 | 60 |
| | First layer | (µm) | 10 | 20 | | 10 | 10 | 10 | 10 |
| | Second layer | (µm) | 50 | 40 | | 50 | 50 | 50 | 50 |
| Composition of first layer | Resin (A) | (mass%) | 85.0 | 85.0 | | 90.0 | 60.0 | - | - |
| | Resin (A") | (mass%) | - | - | | - | - | 70.0 | 50.0 |
| | Resin (B) | (mass%) | 15.0 | 15.0 | | 10.0 | 40.0 | 30.0 | 50.0 |
| Composition of second layer | Resin (B) | (mass%) | 100.0 | 70.0 | | 70.0 | 70.0 | 70.0 | 70.0 |
| | Resin (C) | (mass%) | - | 30.0 | | 30.0 | 30.0 | 30.0 | 30.0 |
| Heat sealing-start temperature | | [°C] | 146 | 146 | | 144 | 152 | 150 | 156 |
| Thermal fusion strength | | [N/15 mm] | 1.85 | 1.85 | | 3.08 | 0.13 | 5.02 | 1.23 |
| Cold impact resistance | | [J/mm] | 7.8 | 5.3 | | 14.8 | 17.83 | 19.2 | 18.1 |

### Industrial Applicability

The polypropylene-based sealant film of the present disclosure is capable of satisfying both heat resistance and low-temperature heat sealability at a high level and is thus suitable for sealant films for retort packaging materials. In addition, a packaging material composed of the same polypropylene-based material can be obtained by laminating the polypropylene-based sealant film with a polypropylene-based substrate film.

### REFERENCE SIGNS LIST

1 First layer
2 Second layer
3 Adhesive layer
4 Substrate layer
10 Sealant film
100 Packaging material

## Claims

1. A sealant film comprising:
a first layer having heat sealability that contains 65 to 85 mass% of a propylene/ethylene random copolymer (A) having a melting point of 140°C or higher and 15 to 35 mass% of a propylene/ethylene block copolymer (B).

2. The sealant film according to claim 1,
wherein the propylene/ethylene random copolymer (A) has a melt flow rate (MFR: ISO 1133) (temperature: 230°C, load: 2.16 kg) of 2.0 to 8.0 g/10 minutes.

3. The sealant film according to claim 1 or 2,
wherein an ethylene content in the propylene/ethylene random copolymer (A) is 6.0 mass% or less.

4. The sealant film according to any one of claims 1 to 3,
wherein the propylene/ethylene block copolymer (B) has a melt flow rate (MFR: ISO 1133) (temperature: 230°C, load: 2.16 kg) of 0.5 to 2.5 g/10 minutes.

5. The sealant film according to any one of claims 1 to 4,
wherein the propylene/ethylene block copolymer (B) contains 90 to 60 mass% of a propylene polymer (B1) and 10 to 40 mass% of an ethylene/propylene copolymer (B2).

6. The sealant film according to any one of claims 1 to 5, comprising, in this order:
the first layer; and
a second layer containing a propylene/ethylene block copolymer (B) and an ethylene/propylene copolymer elastomer (C).

7. The sealant film according to claim 6,
wherein the second layer contains 90 to 50 mass% of the propylene/ethylene block copolymer (B) and 10 to 50 mass% of the ethylene/propylene copolymer elastomer (C).

8. The sealant film according to claim 6 or 7,
wherein the ethylene/propylene copolymer elastomer (C) has a melt flow rate (MFR: ISO 1133) (temperature: 230°C, load: 2.16 kg) of 0.5 to 3.5 g/10 minutes.

9. The sealant film according to any one of claims 6 to 8,
wherein a mass ratio of a propylene content to an ethylene content (propylene content/ethylene content) in the ethylene/propylene copolymer elastomer (C) is 1.5 to 4.0.

10. The sealant film according to any one of claims 6 to 9,
wherein the first layer has a thickness of 4 to 10 µm, and the second layer has a thickness of 35 µm or more.

11. A packaging material comprising:
the sealant film according to any one of claims 1 to 10; and
a substrate layer.

12. A packaging body made of the packaging material according to claim 11.
